# EUROPEAN PATENT APPLICATION

(11) **EP 4 459 753 A1**
(43) Date of publication of application: **06.11.2024**
(21) Application number: 22916134.4
(22) Date of filing: 27.12.2022
(51) Int. Cl.: H01M 50/105, H01G 11/78, H01M 50/178, H01M 50/184, H01M 50/548

(54) **POWER STORAGE DEVICE**

(30) Priority: 28.12.2021 JP 2021215183; 28.12.2021 JP 2021215200
(71) Applicant: Dai Nippon Printing Co., Ltd., Tokyo 162-8001 (JP)
(72) Inventor: AKUTSU, Koki, Tokyo 162-8001 (JP); SASAKI, Miho, Tokyo 162-8001 (JP)
(74) Representative: Müller-Boré & Partner Patentanwälte PartG mbB
(86) International application number: PCT/JP2022/048361
(87) International publication number: WO 2023/127912

(57) **Abstract**

This power storage device is provided with an electrode body, and an exterior body for sealing the electrode body. The exterior body includes an exterior film for wrapping the electrode body so as to have a projection section that projects farther outward relative to the electrode body, and a seal section sealed by bonding mutually facing surfaces of the exterior film, and includes a projection seal section formed at the projection section, and a back-lining seal section that extends in a direction intersecting the direction in which the projection seal section extends in plan view.

## Description

### Technical Field

The present invention relates to an electrical storage device.

### Background Art

PTL 1 discloses an all-solid-state battery as an example of an electrical storage device. The all-solid-state battery includes an electrode assembly, and an outer packaging that seals the electrode assembly. The outer packaging includes an exterior film wound around the electrode assembly so as to have an opening, and a lid disposed at the opening. The exterior film and the outer peripheral surface of the lid are heat-sealed.

### Citation List

### Patent Literature

PTL 1: Japanese Patent Laid-open Publication No. 2019-153504

### Summary of Invention

### Technical Problem

In the electrical storage device, an opening of an outer packaging is closed with a lid, and there are many constituent elements.

An object of the present invention is to provide an electrical storage device that can be easily formed.

### Solution to Problem

An electrical storage device according to a first aspect of the present invention includes an electrode assembly, and an outer packaging that seals the electrode assembly, the outer packaging includes an exterior film that wraps the electrode assembly so as to have a bulging portion protruding outward with respect to the electrode assembly, and a seal portion sealed by joining surfaces of the exterior film which face each other, and the seal portion includes a bulging seal portion formed in the bulging portion, and a back-lining seal portion extending in a direction crossing a direction in which the bulging seal portion extends in plan view.

An electrical storage device according to a second aspect of the present invention is the electrical storage device according to the first aspect, in which the exterior film is wound around the electrode assembly so as to have the bulging portion, a portion including a first edge and a portion including a second edge in the exterior film are sealed in the back-lining seal portion, and the bulging seal portion includes a portion in which portions including a third edge in the exterior film are sealed.

An electrical storage device according to a third aspect of the present invention is the electrical storage device according to the second aspect, in which the bulging seal portion further includes a portion in which portions including a fourth edge in the exterior film are sealed.

An electrical storage device according to a fourth aspect of the present invention is the electrical storage device according to any one of the first to third aspects, in which the bulging portion includes at least one lateral portion folded inward so that outer surfaces of the exterior film face each other.

An electrical storage device according to a fifth aspect of the present invention is the electrical storage device according to the fourth aspect, in which a root of the back-lining seal portion is located outside the at least one lateral portion.

An electrical storage device according to a sixth aspect of the present invention is the electrical storage device according to any one of the third to fifth aspects, further including an electrode terminal electrically connected to the electrode assembly, in which the bulging portion includes a pair of lateral portions folded inward so that outer surfaces of the exterior film face each other, the bulging seal portion includes a pair of lateral seal portions which is a portion obtained by sealing the pair of lateral portions, and a central seal portion located between the pair of lateral seal portions, and the central seal portion is sealed in a state of sandwiching the electrode terminal.

An electrical storage device according to a seventh aspect of the present invention is the electrical storage device according to any one of the first to third aspects, in which when unfolded, the bulging portion has a width larger than a width of the electrode assembly.

An electrical storage device according to an eighth aspect of the present invention is the electrical storage device according to the seventh aspect, further including an electrode terminal electrically connected to the electrode assembly, in which the bulging seal portion includes a pair of lateral seal portions located outside an end part of the electrode assembly in a width direction when the bulging portion is unfolded, and a central seal portion located between the pair of lateral seal portions, and the central seal portion is sealed in a state of sandwiching the electrode terminal.

An electrical storage device according to a ninth aspect of the present invention is the electrical storage device according to the seventh or eighth aspect, in which the root of the back-lining seal portion includes a portion which overlaps the bulging portion that is in an unfolded state in plan view.

An electrical storage device according to a tenth aspect of the present invention is the electrical storage device according to any one of the seventh to ninth aspects, in which at least a part of the bulging portion is folded so as to face a surface of the outer packaging.

An electrical storage device according to an eleventh aspect of the present invention is the electrical storage device according to any one of the first to tenth aspects, in which a length of a portion of the bulging portion, which does not include the bulging seal portion, in a direction along the back-lining seal portion is equal to or larger than half a length of the electrode assembly in plan view.

An electrical storage device according to a twelfth aspect of the present invention is the electrical storage device according to any one of the first to eleventh aspects, in which the root of the back-lining seal portion is located on a boundary between surfaces of the electrode assembly.

An electrical storage device according to a thirteenth aspect of the present invention includes an electrode assembly and an outer packaging that includes an exterior film and seals the electrode assembly, the outer packaging including a seal portion sealed by joining surfaces of the exterior film which face each other, and a through-hole formed in the seal portion and/or outside the seal portion with respect to the electrode assembly.

An electrical storage device according to a fourteenth aspect of the present invention is the electrical storage device according to the thirteenth aspect, in which the outer packaging includes a bulging portion in which the exterior film protrudes outward with respect to the electrode assembly, the seal portion includes a back-lining seal portion in which a portion including a first edge and a portion including a second edge in the exterior film are sealed, and a bulging seal portion which is formed in the bulging portion and in which portions including a third edge in the exterior film are sealed, and the through-hole is formed in the back-lining seal portion.

An electrical storage device according to a fifteenth aspect of the present invention is the electrical storage device according to the fourteenth aspect, further including an electrode terminal electrically connected to the electrode assembly, in which the bulging seal portion is sealed in a state of sandwiching the electrode terminal.

An electrical storage device according to a sixteenth aspect of the present invention is the electrical storage device according to any one of the fourteenth to fifteenth aspects, in which the bulging portion includes at least one lateral portion folded inward so that outer surfaces of the exterior film face each other.

An electrical storage device according to a seventeenth aspect of the present invention is the electrical storage device according to the fourteenth to fifteenth aspects, in which when unfolded, the bulging portion has a width larger than a width of the electrode assembly.

### Advantageous Effects of Invention

The electrical storage device according to the present invention can be easily formed.

### Brief Description of Drawings

[Fig. 1] Fig. 1 is a plan view of an electrical storage device according to a first embodiment.
[Fig. 2] Fig. 2 is a side view of the electrical storage device of Fig. 1.
[Fig. 3] Fig. 3 is a view in which the exterior film of the electrical storage device of Fig. 1 is unfolded.
[Fig. 4] Fig. 4 is a flowchart showing an example of a manufacturing process of the electrical storage device of Fig. 1.
[Fig. 5] Fig. 5 is a plan view of an electrical storage device according to a second embodiment.

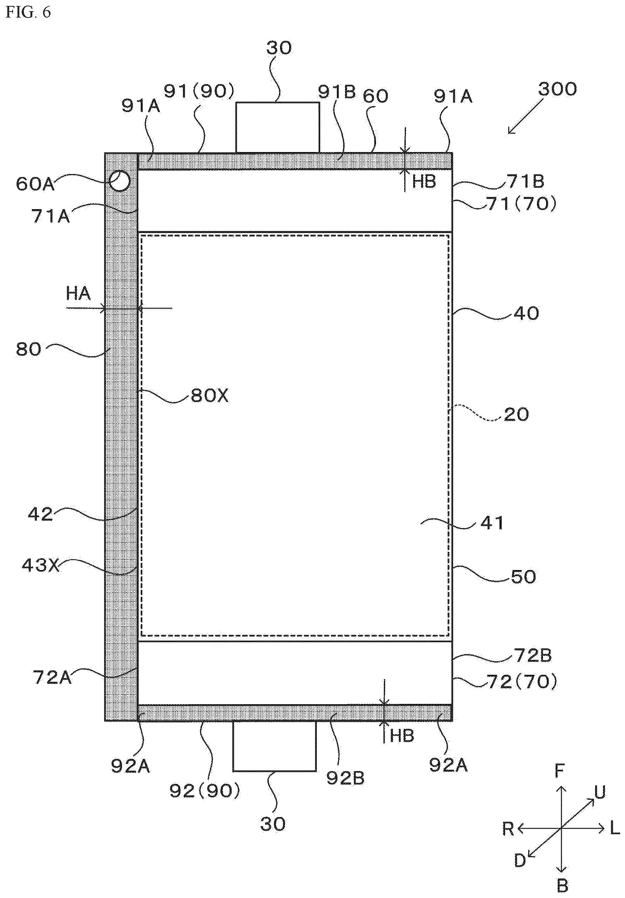

[Fig. 6] Fig. 6 is a plan view of an electrical storage device according to a third embodiment.
[Fig. 7] Fig. 7 is a flowchart showing an example of a manufacturing process of the electrical storage device of Fig. 6.
[Fig. 8] Fig. 8 is a plan view of an electrical storage device according to a fourth embodiment.
[Fig. 9] Fig. 9 is a plan view of an electrical storage device according to a fifth embodiment.
[Fig. 10] Fig. 10 is a side view of the electrical storage device of Fig. 9.
[Fig. 11] Fig. 11 is a front view of the electrical storage device of Fig. 9.
[Fig. 12] Fig. 12 is a flowchart showing an example of a method for manufacturing the electrical storage device of Fig. 9.
[Fig. 13] Fig. 13 is a sectional view of an electrical storage device according to a modification of the third embodiment.

### Description of Embodiments

Hereinafter, an electrical storage device according to an embodiment of the present invention will be described with reference to the drawings. In this specification, a numerical range indicated by the term "A to B" means "A or more" and "B or less". For example, the expression of "2 to 15 mm" means 2 mm or more and 15 mm or less.

### [1. FIRST EMBODIMENT]

### <1-1. Configuration of electrical storage device>

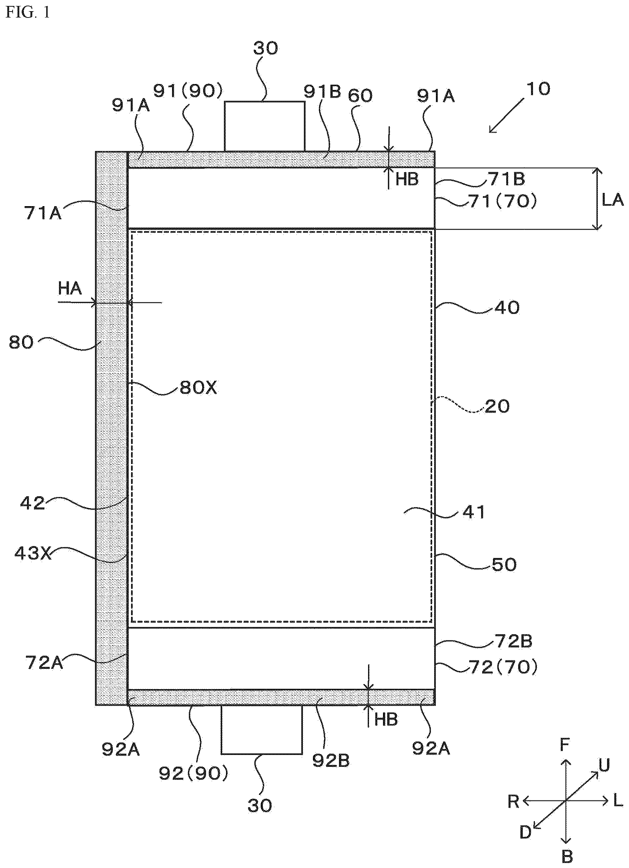

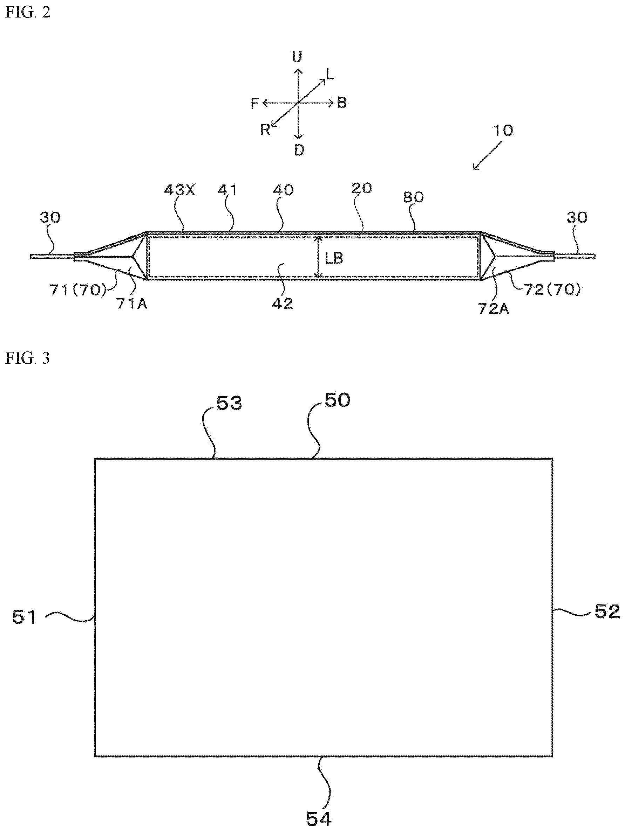

Fig. 1 is a plan view schematically showing an electrical storage device 10 according to a first embodiment. Fig. 2 is a side view of the electrical storage device 10 of Fig. 1. Fig. 3 is a view in which the exterior film 50 of the electrical storage device 10 of Fig. 1 is unfolded. In Figs. 1 and 2, the direction along arrow UD indicates a thickness direction of the electrical storage device 10, and the direction along arrow LR indicates a width direction of the electrical storage device 10. The direction along arrow FB indicates a depth direction of the electrical storage device 10. The directions indicated by each of arrows UDLRFB are also shared with the subsequent drawings.

The electrical storage device 10 includes an electrode assembly 20, an electrode terminal 30, and an outer packaging 40. The electrode assembly 20 includes, for example, electrodes (a positive electrode and a negative electrode) forming an electrical storage member of a lithium ion battery, a capacitor or an all-solid-state battery. In the present embodiment, the shape of the electrode assembly 20 is substantially a cuboid. Note that the "substantially cuboid" includes a perfect cuboid, and for example, a solid that can be seen as a cuboid by modifying the shape of a part of the outer surface thereof. The shape of the electrode assembly 20 may be, for example, a cylinder or a polygonal column.

In the present embodiment, the electrical storage device 10 includes two electrode terminals 30. The electrode terminal 30 is a metal terminal for use in input and output of electrical power in the electrode assembly 20. One end part of the electrode terminal 30 is electrically connected to an electrode (positive electrode or negative electrode) in the electrode assembly 20. The other end part of the electrode terminal 30 protrudes outward from an end edge of the outer packaging 40.

The metal material for forming the electrode terminal 30 is, for example, aluminum, nickel, copper or the like. For example, when the electrode assembly 20 is a lithium ion battery, the electrode terminal 30 connected to the positive electrode is typically made from aluminum or the like, and the electrode terminal 30 connected to the negative electrode is typically made from copper, nickel or the like. The outermost layer of the electrode assembly 20 is not necessarily an electrode, and may be, for example, a protective tape or a separator.

The outer packaging 40 includes an exterior film 50, and seals the electrode assembly 20. In the electrical storage device 10, the exterior film 50 is wound around the electrode assembly 20 to seal an open portion, thereby forming the outer packaging 40.

For example, there is a method in which a housing portion (recess) for housing the electrode assembly 20 is formed in the exterior film 50 through cold molding. However, it is not always easy to form a deep housing portion by such a method. If an attempt is made to form a deep (for example, 15 mm in terms of molding depth) housing portion (recess) by cold molding, pinholes or cracks are generated in the exterior film 50, leading to a rise in possibility that battery performance is deteriorated. On the other hand, since the outer packaging 40 seals the electrode assembly 20 by winding the exterior film 50 around the electrode assembly 20, the electrode assembly 20 can be easily sealed regardless of the thickness of the electrode assembly 20. For reducing a dead space between the electrode assembly 20 and the exterior film 50 in order to improve the volume energy density of the electrical storage device 10, it is preferable that the exterior film 50 is wound in a state of being in contact with the outer surface of the electrode assembly 20. In an all-solid-state battery, it is necessary to eliminate the space between the electrode assembly 20 and the exterior film 50 from the viewpoint that it is necessary to uniformly apply a high pressure from the outer surface of the battery for exhibiting battery performance, and therefore, it is preferable that the exterior film 50 is wound in a state of being in contact with the outer surface of the electrode assembly 20.

The exterior film 50 is, for example, a laminate (laminate film) including a base material layer, a barrier layer and a heat-sealable resin layer in the stated order. The exterior film 50 is not required to include all these layers, and may be free of, for example, the barrier layer. That is, the exterior film 50 is only required to be made from a material that is flexible and easy to bend, and the exterior film 50 may be made from, for example, a resin film. The exterior film 50 is preferably heat-sealable.

The base material layer in the exterior film 50 is a layer for imparting heat resistance to the exterior film 50 to suppress generation of pinholes which may occur during processing or distribution. The base material layer includes, for example, at least one of a stretched polyester resin layer and a stretched polyamide resin layer. For example, when the base material layer includes at least one of a stretched polyester resin layer and a stretched polyamide resin layer, the barrier layer can be protected during processing of the exterior film 50 to suppress breakage of the exterior film 50. From the viewpoint of increasing the tensile elongation of the exterior film 50, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. The base material layer may include both the stretched polyester resin layer and the stretched polyamide resin layer, and it is preferable that the stretched polyester resin layer, the adhesive layer and the stretched polyamide resin layer in the stated order from the outside. From the viewpoint of film strength, the thickness of the material layer is, for example, preferably 5 to 300 µm, more preferably 20 to 150 µm. When the base material layer has a multi-layered structure including a stretched polyester resin layer, an adhesive layer, and a stretched polyamide resin layer as described above, the thickness of the base material layer is preferably 25 to 35 µm or 35 to 45 µm.

The barrier layer in the exterior film 50 is made from, for example, an aluminum foil from the viewpoint of moisture resistance, processability such as extensibility, and cost. The aluminum foil preferably contains iron from the viewpoint of suitability for packaging in packaging of the electrode assembly 20, and pinhole resistance. The content of iron in the aluminum alloy foil is preferably 0.5 to 5.0 mass%, more preferably 0.7 to 2.0 mass%. When the content of iron is 0.5 mass% or more, the exterior film 50 has suitability for packaging, excellent pinhole resistance and extensibility. When the content of iron is 5.0 mass% or less, the exterior film 50 has excellent flexibility. The barrier layer may include a metal foil having barrier properties, a deposited film, and a resin layer. Examples of the metal foil include an aluminum alloys, stainless steel, titanium steel, and steel plates.

From the viewpoint of barrier properties, pinhole resistance and suitability for packaging, the thickness of the barrier layer is, for example, preferably 15 to 100 µm, more preferably 30 to 80 µm. The thickness of the barrier layer may be 30 to 50 µm, 50 to 70 µm, or 70 to 90 µm. When the thickness of the barrier layer is 15 µm or more, the exterior film 50 is less likely to be broken even if stress is applied by packaging processing. When the thickness of the barrier layer is 100 µm or less, an increase in mass of the exterior film 50 can be reduced, and a decrease in weight energy density of the electrical storage device 10 can be suppressed.

When the barrier layer is an aluminum foil, it is preferable that a corrosion-resistant film is provided at least on a surface on a side opposite to the base material layer for prevention of dissolution and corrosion, and the like. The barrier layer may include a corrosion-resistant film on each of both surfaces. Here, the corrosion-resistant film refers to a thin film obtained by subjecting the surface of the barrier layer to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer. Specifically, the corrosion-resistant film means a film which improves the acid resistance of the barrier layer (acid-resistant film), a film which improves the alkali resistance of the barrier layer (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer is provided with the corrosion-resistant film, the barrier layer is regarded as including the corrosion-resistant film.

The corrosion-resistant film exhibits the effects of preventing delamination between the barrier layer (for example, an aluminum alloy foil) and the base material layer during molding of the exterior film 50; preventing dissolution and corrosion of the surface of the barrier layer, particularly dissolution and corrosion of aluminum oxide present on the surface of the barrier layer when the barrier layer is an aluminum alloy foil, by hydrogen fluoride generated by reaction of an electrolyte with moisture; improving the bondability (wettability) of the surface of the barrier layer; preventing delamination between the base material layer and the barrier layer during heat-sealing; and preventing delamination between the base material layer and the barrier layer during molding.

The heat-sealable resin layer is joined to, for example, the barrier layer with an adhesive layer interposed therebetween. The heat-sealable resin layer in the exterior film 50 is a layer that imparts a heat sealing property to the exterior film 50 by heat sealing. Examples of the heat-sealable resin layer include resin films formed of a polyester-based resin such as a polyethylene terephthalate-based resin or a polybutylene terephthalate-based resin, a polyolefin-based resin such as a polyethylene-based resin or a polypropylene-based resin, or an acid-modified polyolefin-based resin obtained by graft-modifying the polyolefin-based resin with an acid such as maleic anhydride. From the viewpoint of sealability and strength, the thickness of the heat-sealable resin layer is, for example, preferably 20 to 300 µm, more preferably 40 to 150 µm.

The exterior film 50 preferably includes one or more layers having a buffer function (hereinafter, referred to as "buffer layers") outside the heat-sealable resin layer, more preferably outside the barrier layer. The buffer layer may be laminated outside the base material layer, and the base material layer may also function as a buffer layer. When the exterior film 50 includes a plurality of buffer layers, the buffer layers may lie side-by-side, or may be laminated with the base material layer, the barrier layer or the like interposed between the buffer layers.

A material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicon rubber. The rubber hardness is preferably about 20 to 90. The material for forming a nonwoven fabric is preferably a material having excellent heat resistance. When the buffer layer is made from a nonwoven fabric, the lower limit of the thickness of the buffer layer is preferably 100 µm, more preferably 200 µm, still more preferably 1,000 µm. When the buffer layer is made from a nonwoven fabric, the upper limit of the thickness of the buffer layer is preferably 5,000 µm, more preferably 3,000 µm. The thickness of the buffer layer is preferably in the range of 100 µm to 5,000 µm, 100 µm to 3,000 µm, 200 µm to 5,000 µm, 200 µm to 3,000 µm, 1,000 µm to 5,000 µm, or 1,000 µm to 3,000 µm. The thickness of the buffer layer is most preferably in the range of 1,000 µm to 3,000 µm.

When the buffer layer is made from rubber, the lower limit of the thickness of the buffer layer is preferably 0.5 mm. When the buffer layer is made from rubber, the upper limit of the thickness of the buffer layer is preferably 10 mm, more preferably 5 mm, still more preferably 2 mm. When the buffer layer is made from rubber, the thickness of the buffer layer is in the range of 0.5 mm to 10 mm, 0.5 mm to 5 mm, or 0.5 mm to 2 mm.

When the exterior film 50 includes a buffer layer, the buffer layer functions as a cushion, so that the exterior film 50 is prevented from being damaged by the impact of falling of the electrical storage device 10 or handling during manufacturing of the electrical storage device 10.

In the present embodiment, the exterior film 50 is wound around the electrode assembly 20 so as to have a bulging portion 70 protruding outward with respect to the electrode assembly 20. With the exterior film 50 wound around the electrode assembly 20 so as to have the bulging portion 70, surfaces of the exterior film 50 which face each other (heat-sealable resin layers) are heat-sealed to form a seal portion 60. In the present embodiment, the bulging portion 70 includes a first bulging portion 71 and a second bulging portion 72. The electrode assembly 20 is located between the first bulging portion 71 and the second bulging portion 72.

The first bulging portion 71 faces the second bulging portion 72 with the electrode assembly 20 interposed therebetween. The first bulging portion 71 includes a pair of lateral portions 71A and 71B in a lateral direction of the outer packaging 40 in plan view. The second bulging portion 72 includes a pair of lateral portions 72A and 72B in a lateral direction of the outer packaging 40 in plan view. In the present embodiment, the lateral portions 71A, 71B, 72A and 72B are folded inward so that the heat-sealable resin layers (inner surfaces) of the exterior film 50 face each other. In other words, the lateral portions 71A, 71B, 72A and 72B are folded inward so that the base material layers (outer surfaces) of the exterior film 50 face each other. In the present embodiment, the outer packaging 40 is a so-called gable top-type pouch.

The seal portion 60 includes a back-lining seal portion 80 and a bulging seal portion 90. The back-lining seal portion 80 is formed by heat-sealing a portion including a first edge 51 and a portion including a second edge 52 in the exterior film 50 shown in Fig. 3. The back-lining seal portion 80 extends in a longitudinal direction of the outer packaging 40. In the outer packaging 40, a location at which the back-lining seal portion 80 is formed can be arbitrarily selected. In the present embodiment, a root 80X of the back-lining seal portion 80 is preferably located on a side 43X forming a boundary between the first surface 41 and the second surface 42 of the outer packaging 40. The first surface 41 has a larger area over the second surface 42. The root 80X of the back-lining seal portion 80 may be located on any surface of the outer packaging 40, or may be located outside the outer line of the electrode assembly 20 in plan view. The root 80X of the back-lining seal portion 80 may be located outside at least one of the lateral portions 71A, 71B, 72A and 72B. When the root 80X of the back-lining seal portion 80 is located outside at least one of the lateral portions 71A, 71B, 72A and 72B, the back-lining seal portion 80 and the bulging seal portion 90 can be easily formed because the back-lining seal portion 80 and the bulging seal portion 90 are located apart from each other. Further, when another electrical storage device 10 is stacked on the first surface 41, a gap is hardly formed between the stacked electrical storage device 10 and the underlying electrical storage device 10, and therefore efficiency in stacking is enhanced. In the present embodiment, the back-lining seal portion 80 protrudes outward with respect to the electrode assembly 20 in plan view. For example, back-lining seal portion 80 may be folded toward the second surface 42 of the outer packaging 40.

In the electrical storage device 10 of the present embodiment, the back-lining seal portion 80 is not formed on the first surface 41 which has a large area. The first surface 41 is flatter as compared to a case where a sealed portion such as the back-lining seal portion 80 is in contact with the first surface 41. Therefore, even if another electrical storage device 10 is placed on the first surface 41, the other electrical storage device 10 does not tilt. As a result, the electrical storage device 10 is such that when a plurality of electrical storage devices 10 are stacked, the unevenness of the distribution of pressure applied to the electrical storage device 10 can be suppressed. In other words, when a module is formed by stacking a plurality of electrical storage devices 10, the back-lining seal portion 80 is not disposed on a surface (first surface 41) adjacent to the neighboring electrical storage device 10. In an all-solid-state battery, such a configuration is preferable from the viewpoint that it is necessary to uniformly apply a high pressure from the outer surface of the battery for exhibiting battery performance.

The bulging seal portion 90 includes a first bulging seal portion 91 and a second bulging seal portion 92. The first bulging seal portion 91 is formed in the first bulging portion 71. The first bulging seal portion 91 extends in a lateral direction of the outer packaging 40. The first bulging seal portion 91 is formed by heat-sealing a portion including a third edge 53 in the exterior film 50. The first bulging seal portion 91 includes a pair of lateral seal portions 91A, and a central seal portion 91B. The pair of lateral seal portions 91A is a portion in which the heat-sealable resin layers of a pair of folded lateral portions 71A and 71B are heat-sealed. The central seal portion 91B is a portion located between the pair of lateral seal portions 91A. The central seal portion 91B is sealed in a state of sandwiching the electrode terminal 30.

The second bulging seal portion 92 is formed in the second bulging portion 72. The second bulging seal portion 92 extends in a lateral direction of the outer packaging 40. The second bulging seal portion 92 is formed by heat-sealing a portion including a fourth edge 54 in the exterior film 50 (see Fig. 3). The second bulging seal portion 92 includes a pair of lateral seal portions 92A, and a central seal portion 92B. The pair of lateral seal portions 92A is a portion in which the heat-sealable resin layers of a pair of folded lateral portions 72A and 72B are heat-sealed. The central seal portion 92B is a portion located between the pair of lateral seal portions 92A. The central seal portion 92B is in a state of sandwiching two of the electrode terminals 30.

A relationship between a seal width HA of the back-lining seal portion 80 and a seal width HB of the bulging seal portion 90 can be arbitrarily selected. In the present embodiment, the seal width HA of the back-lining seal portion 80 is larger than the seal width HB of the bulging seal portion 90.

A length LA of a portion of the bulging portion 70 in a direction along the back-lining seal portion 80, which does not include the bulging seal portion 90, in plan view, can be arbitrarily selected. The length LA is preferably equal to or larger than half the thickness LB of the electrode assembly 20 (see Fig. 2) from the viewpoint of suppressing interference between a seal bar and the electrode assembly 20 during formation of the bulging seal portion 90 in the manufacturing process of the electrical storage device 10.

### <1-2. Method for manufacturing electrical storage device>

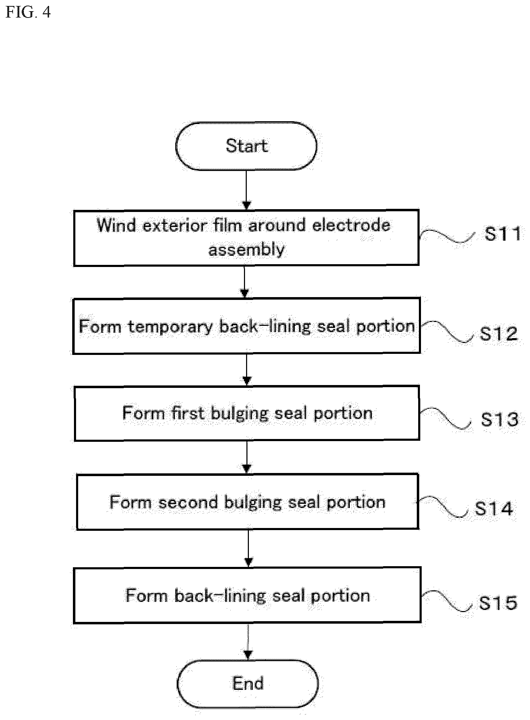

Fig. 4 is a flowchart showing an example of a method for manufacturing the electrical storage device 10. The method for manufacturing the electrical storage device 10 includes, for example, a first step, a second step, a third step, a fourth step and a fifth step. The first to fifth steps are carried out by, for example, an apparatus for manufacturing the electrical storage device 10.

In the first step in step S11, the manufacturing apparatus winds the exterior film 50 around the electrode assembly 20 so as to form the bulging portion 70 in the electrode assembly 20.

The second step in step S12 is carried out after the first step. In the second step, the manufacturing apparatus forms a partially unsealed back-lining seal portion (hereinafter, referred to a "temporary back-lining seal portion") by heat-sealing the heat-sealable resin layer of a portion including the first edge 51 and the heat-sealable resin layer of a portion including the second edge 52 in the exterior film 50. The unsealed portion can be formed by using, for example, a seal bar having a shape such that a part of the sealing bar does not come into contact with the exterior film 50. In another example, the unsealed portion can be formed by interposing a fluororesin film or the like between surfaces (heat-sealable resin layers) of the exterior film 50, which face each other. By forming the temporary back-lining seal portion before formation of the first bulging seal portion 91 and the second bulging seal portion 92, the electrode assembly 20 can be held by the exterior film 50, so that the location of the electrode assembly 20 is unlikely to shift with respect to the exterior film 50. Therefore, generation of wrinkles is suppressed during formation of the first bulging seal portion 91 and the second bulging seal portion 92 are formed.

The third step in step S13 is carried out after the second step. In the third step, the manufacturing apparatus forms the first bulging seal portion 91 by folding the lateral portions 71A and 71B of the first bulging portion 71 inward, and heat-sealing the heat-sealable resin layers of portions including the third edge 53 in the exterior film 50. The manufacturing apparatus also heat-seals an end part of the back-lining seal portion 80 on the first bulging portion 71 side again during formation of the first bulging seal portion 91 in the third step. Therefore, the end part of the back-lining seal portion 80 on the first bulging portion 71 side is double-sealed.

The fourth step in step S14 is carried out after the third step. In the fourth step, the manufacturing apparatus forms the second bulging seal portion 92 by folding the lateral portions 72A and 72B of the second bulging portion 72 inward, and heat-sealing the heat-sealable resin layers of portions including the fourth edge 54 in the exterior film 50. The manufacturing apparatus also heat-seals an end part of the back-lining seal portion 80 on the second bulging portion 72 side again during formation of the second bulging seal portion 92 in the fourth step. Therefore, the end part of the back-lining seal portion 80 on the second bulging portion 72 side is double-sealed. The order of the fourth step and the third step may be reversed.

The fifth step in step S15 is carried out after the third step or the fourth step. In the fifth step, the manufacturing apparatus injects an electrolytic solution from the unsealed portion of the temporary back-lining seal portion, evacuates the exterior film 50, and then heat-seals the unsealed portion to form the back-lining seal portion 80. When the electrical storage device 10 is an all-solid-state battery, the step of injecting an electrolytic solution in the fifth step is omitted.

### <1-3. Action and effect of electrical storage device>

The electrical storage device 10 includes the electrode assembly 20, and the outer packaging 40 that seals the electrode assembly 20. The outer packaging 40 includes the exterior film 50 that wraps the electrode assembly 20 so as to have the bulging portion 70 protruding outward with respect to the electrode assembly 20, and the seal portion 60 sealed by joining surfaces of the exterior film 50 which face each other. The seal portion 60 includes the bulging seal portion 90 formed in the bulging portion 70 and the back-lining seal portion 80 extending in a direction crossing a direction in which the bulging seal portion 90 extends in plan view. The electrical storage device 10 can have a simplified configuration because the electrode assembly 20 is sealed without use of a lid or the like.

### [2. SECOND EMBODIMENT]

An electrical storage device 200 according to a second embodiment has the same configuration as in the first embodiment except that a bulging portion 270 and a bulging seal portion 290 are provided. Hereinafter, the electrical storage device 200 according to the second embodiment will be described mainly for portions different from those in the first embodiment.

### <2-1. Configuration of electrical storage device>

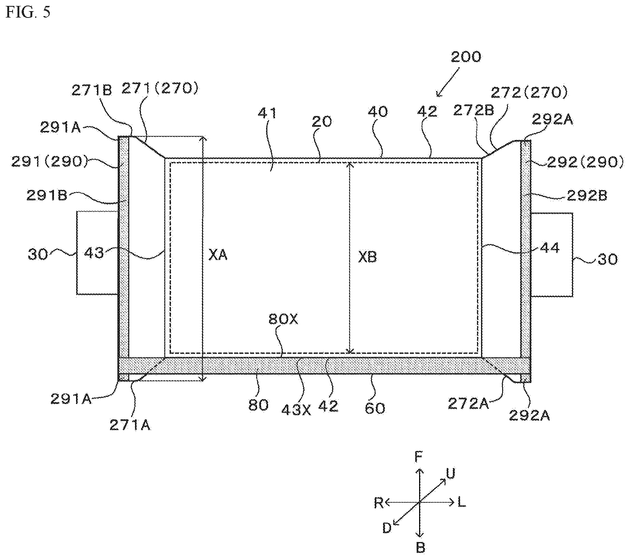

Fig. 5 is a plan view schematically showing an electrical storage device 200 according to the second embodiment. In the present embodiment, the bulging portion 270 includes a first bulging portion 271 and a second bulging portion 272 which face each other with an electrode assembly 20 interposed therebetween. The first bulging portion 271 includes a pair of lateral portions 271A and 271B in a lateral direction of an outer packaging 40 in plan view. The second bulging portion 272 includes a pair of lateral portions 272A and 272B in a lateral direction of the outer packaging 40 in plan view. In the present embodiment, the lateral portions 271A, 271B, 272A and 272B are such that unlike the first embodiment, an exterior film 50 is not folded inward so that the inner surfaces of the exterior film 50 face each other, in other words, the outer surfaces of the exterior film 50 face each other. When unfolded, the bulging portion 270 has a width XA larger than a width XB of the electrode assembly 20. In the present embodiment, the outer packaging 40 is a so-called brick-type pouch. In the present embodiment, a root 80X of the back-lining seal portion 80 is superposed on the first bulging portion 271 and the second bulging portion 272 in plan view.

The bulging seal portion 290 includes a first bulging seal portion 291 and a second bulging seal portion 292. The first bulging seal portion 291 is formed in the first bulging portion 271. The first bulging seal portion 291 extends in a lateral direction of the outer packaging 40. The first bulging seal portion 291 is formed by heat-sealing a portion including a third edge 53 in the exterior film 50. The first bulging seal portion 291 includes a pair of lateral seal portions 291A, and a central seal portion 291B. The pair of lateral seal portions 291A is a portion in which the heat-sealable resin layers of portions of the exterior film 50 which are located outside the end part of the electrode assembly 20 in the width direction are heat-sealed to each other. The central seal portion 291B is a portion located between the pair of lateral seal portions 291A. The central seal portion 291B is sealed in a state of sandwiching the electrode terminal 30. From the viewpoint of forming the compact electrical storage device 200 compact, in the first bulging portion 271, the central seal portion 291B may be folded so as to face a third surface 43 of the outer packaging 40, and joined to the third surface 43 with an adhesive or the like, or with the central seal portion 291B folded so as to face the third surface 43 of the outer packaging 40, a pair of lateral seal portions 291A may be folded so as to face a pair of second surfaces 42 or third surfaces 43 of the outer packaging 40, and joined to the second surface 42 or the third surface 43 with an adhesive or the like. When at least one of the lateral seal portions 291A is folded so as to face the second surface 42 or the third surface 43 of the outer packaging 40, the width XA of the bulging portion 270 may be smaller than the width XB of the electrode assembly 20. The width XA of the bulging portion 270 is a width where the pair of lateral seal portions 291A is unfolded.

The second bulging seal portion 292 is formed in the second bulging portion 272. The second bulging seal portion 292 extends in a lateral direction of the outer packaging 40. The second bulging seal portion 292 is formed by heat-sealing a portion including a fourth edge 54 in the exterior film 50. The second bulging seal portion 292 includes a pair of lateral seal portions 292A, and a central seal portion 292B. The pair of lateral seal portions 292A is a portion in which the heat-sealable resin layers of portions of the exterior film 50 which are located outside the end part of the electrode assembly 20 in the width direction are heat-sealed to each other. The central seal portion 292B is a portion located between the pair of lateral seal portions 292A. The central seal portion 292B is sealed in a state of sandwiching two of the electrode terminals 30. From the viewpoint of forming the compact electrical storage device 200 compact, in the second bulging portion 272, the central seal portion 292B may be folded so as to face the fourth surface 44 of the outer packaging 40, and joined to the fourth surface 44 with an adhesive or the like. Alternatively, with the central seal portion 292B folded so as to face the fourth surface 44 of the outer packaging 40, a pair of lateral seal portions 292A may be folded so as to face a pair of second surfaces 42 or fourth surfaces 44 of the outer packaging 40, and joined to the second surface 42 or the fourth surface 44 with an adhesive or the like. When at least one of the lateral seal portions 292A is folded so as to face the second surface 42 or the fourth surface 44 of the outer packaging 40, the width XA of the bulging portion 270 may be smaller than the width XB of the electrode assembly 20. The width XA of the bulging portion 270 is a width where the pair of lateral seal portions 292A is unfolded. The electrical storage device 200 according to the present embodiment has the same effect as the electrical storage device 10 according to the first embodiment.

### <2-2. Method for manufacturing electrical storage device>

The electrical storage device 200 according to the present embodiment can be manufactured by a method similar to the method for manufacturing the electrical storage device 10 according to the first embodiment. The electrical storage device 200 can be manufactured without either folding the lateral portions 271A and 271B of the first bulging portion 271 inward in the third step or folding the lateral portions 272A and 272B of the second bulging portion 272 inward in the fourth step of the method for manufacturing the electrical storage device 10 according to the first embodiment.

### [3. THIRD EMBODIMENT]

An electrical storage device 300 according to a third embodiment has the same configuration as in the first embodiment except that a through-hole 60A is provided. Hereinafter, the electrical storage device 300 according to the third embodiment will be described mainly for portions different from those in the first embodiment.

Japanese Patent No. 4509242 discloses an example of an electrical storage device. The electrical storage device includes an electrode assembly, and an exterior film that seals the electrode assembly.

In recent years, electrical storage devices have been required to have a high capacity. For this reason, the weight of the electrode assembly increases, so that it is difficult to fix the electrical storage device at a desired location when the electrical storage device is conveyed and disposed at a location of installation. An object of the electrical storage device 300 according to the third embodiment is to provide an electrical storage device that can be easily fixed at a desired location.

### <3-1. Configuration of electrical storage device>

In the present embodiment, a through-hole 60A extending through an outer packaging 40 is formed in a seal portion 60 so that the electrical storage device 300 can be easily fixed at a desired location. For example, a jig for fixing the electrical storage device 300 is attached to the through-hole 60A. The jig is, for example, a rod that is inserted into the through-hole 60A or a pin that is inserted into the through-hole 60A. When the jig is a rod, the electrical storage device 300 may be fixed by, for example, fixing the rod and a back-lining seal portion 80 with a clip with the jig inserted in the through-hole 60A. When the jig is a pin, the electrical storage device 300 may be fixed by inserting the pin into the through-hole 60A and driving the pin into a plate.

A location at which the through-hole 60A is formed in the seal portion 60 can be arbitrarily selected. It is preferable that the through-hole 60A is formed in the back-lining seal portion 80 having a large seal width. Since the through-hole 60A is formed in a location away from an electrode terminal 30, the through-hole 60A and the electrode terminal 30 are unlikely to interfere with each other. Since the through-hole 60A is formed in the back-lining seal portion 80 having a large seal width in the seal portion 60, the through-hole 60A has a large area. Since it is possible to keep a sufficient distance between the through-hole 60A and the outer edge of the back-lining seal portion 80, the barrier property of the outer packaging 40 is unlikely to be deteriorated. In the present embodiment, the through-hole 60A is formed in the vicinity of a first bulging seal portion 91 in the back-lining seal portion 80 as shown in Fig. 1.

The shape of the through-hole 60A can be arbitrarily selected. In the present embodiment, the through-hole 60A has a circular shape. The shape of the through-hole 60A may be an ellipse, a triangle, a quadrangle, or a polygon having five or more angles.

The number of through-holes 60A formed in the seal portion 60 can be arbitrarily selected. In the present embodiment, the number of through-holes 60A formed in the seal portion 60 is 1. The number of through-holes 60A formed in the seal portion 60 may be 2 or more.

### <3-2. Method for manufacturing electrical storage device>

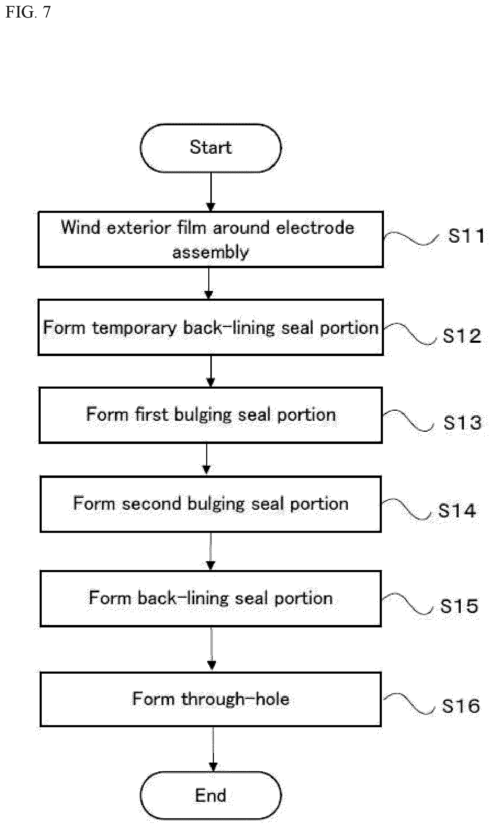

Fig. 7 is a flowchart showing an example of a method for manufacturing the electrical storage device 300. The method for manufacturing the electrical storage device 300 includes, for example, a sixth step in addition to the first to fifth steps in the first embodiment (see Fig. 4). The first to sixth steps are carried out by, for example, an apparatus for manufacturing the electrical storage device 300. Since the first to fifth steps are the same as in the first embodiment, descriptions of these steps are omitted.

The sixth step in step S16 is carried out after the fifth step. In the sixth step, the manufacturing apparatus forms the through-hole 60A in the back-lining seal portion 80. Since the through-hole 60A is formed in the back-lining seal portion 80, for example, a plurality of electrical storage devices 10 can be easily conveyed by attaching a jig to the through-hole 60A. In addition, a plurality of electrical storage devices 10 can be easily brought into line. The sixth step may be carried out after the second step and before the third or fourth step. In other words, the through-hole 60A may be formed in a sealed portion of the temporary back-lining seal portion.

### <3-3. Action and effect of electrical storage device>

In the electrical storage device 300, the through-hole 60A is formed in the seal portion 60. Therefore, even if the electrode assembly 20 has a heavy weight, the electrical storage device 10 can be easily fixed at a desired location by attaching the jig to the through-hole 60A.

### [4. FOURTH EMBODIMENT]

An electrical storage device 400 according to a fourth embodiment has the same configuration as in the second embodiment except that a through-hole 60A is provided. Hereinafter, the electrical storage device 400 according to the fourth embodiment will be described mainly for portions different from those in the second embodiment.

### <4-1. Configuration of electrical storage device>

In the present embodiment, the through-hole 60A is formed substantially at the center of a back-lining seal portion 80 in a longitudinal direction. Since the through-hole 60A is formed in a portion where a back-lining seal portion 80 and a bulging portion 70 do not overlap each other, a jig can be easily inserted into the through-hole 60A. The electrical storage device 400 according to the present embodiment has the same effect as the electrical storage device 300 according to the third embodiment.

### <4-2. Method for manufacturing electrical storage device>

The electrical storage device 400 according to the present embodiment can be manufactured by a method similar to the method for manufacturing the electrical storage device 300 according to the third embodiment. The electrical storage device 400 can be manufactured without either folding the lateral portions 271A and 271B of the first bulging portion 271 inward in the third step or folding the lateral portions 272A and 272B of the second bulging portion 272 inward in the fourth step of the method for manufacturing the electrical storage device 300 according to the third embodiment.

### [5. FIFTH EMBODIMENT]

An electrical storage device 500 according to a fifth embodiment has the same configuration as in the third embodiment except that an outer packaging 340 is provided. Hereinafter, the electrical storage device 500 according to the fifth embodiment will be described mainly for portions different from those in the third embodiment.

### <5-1. Configuration of electrical storage device>

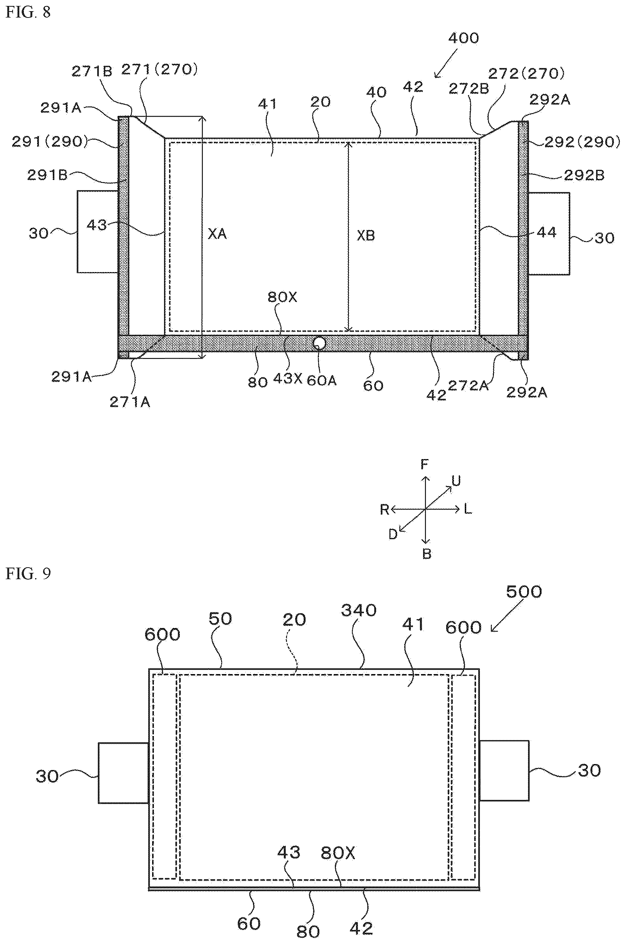

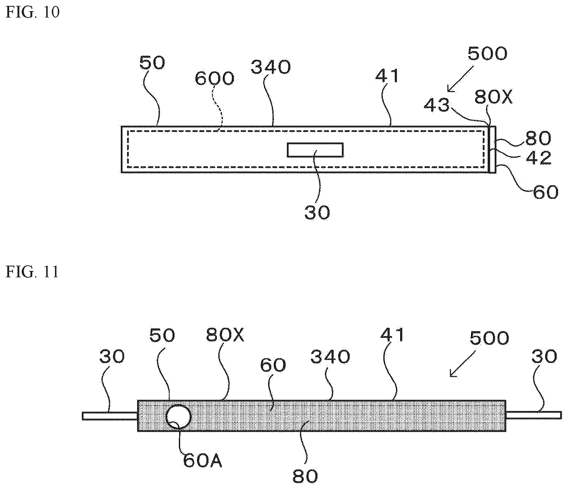

Fig. 9 is a plan view schematically showing an electrical storage device 500 according to the fifth embodiment. Fig. 10 is a side view of the electrical storage device 500 of Fig. 9. Fig. 11 is a front view of the electrical storage device 300 of Fig. 9.

The electrical storage device 500 includes an outer packaging 340. The outer packaging 340 is formed by fitting a lid 600 into each of openings at both ends of an exterior film 50 wound around an electrode assembly 20. The exterior film 50 and the lid 600 are heat-sealed in a state where the lid 600 fitted.

The lid 600 is a bottomed tray-shaped member having a rectangular shape in plan view, and is formed by, for example, cold-molding the exterior film 50. The lid 600 is not necessarily formed of the exterior film 50, and may be metal molded article, or a resin molded article. In the electrical storage device 500, the lid 600 is disposed so as to locate the bottom surface side of the lid 600 inside the outer packaging 340. In the electrical storage device 500, the bottom surface side of the lid 600 is not necessarily located inside the outer packaging 340. In the electrical storage device 500, the bottom surface side of the lid 600 may be located outside the outer packaging 340.

In a state where the electrode assembly 20 is housed, an electrode terminal 30 protrudes to the outside of the outer packaging 340 by passing through a through-hole formed in the lid 600. A small gap between the through-hole of the lid 600 and the electrode terminal 30 is filled with, for example, resin. In the electrical storage device 500, the location at which the electrode terminal 30 protrudes to the outside can be arbitrarily selected. For example, the electrode terminal 30 may protrude to the outside from a hole formed in one of the six surfaces of the outer packaging 340. In this case, a small gap between the outer packaging 340 and the electrode terminal 30 is filled with, for example, a resin. In the electrical storage device 500, the lid 600 and the electrode terminal 30 are provided separately, but the lid 600 and the electrode terminal 30 may be integrally formed.

In the present embodiment, a back-lining seal portion 80 is folded toward a second surface 42 of the outer packaging 40. The back-lining seal portion 80 and the second surface 42 are not joined to each other. A through-hole 60A is formed in the vicinity of one lid 600 of the back-lining seal portion 80. The electrical storage device 500 according to the present embodiment has the same effect as the electrical storage device 300 according to the third embodiment.

### <5-2. Method for manufacturing electrical storage device>

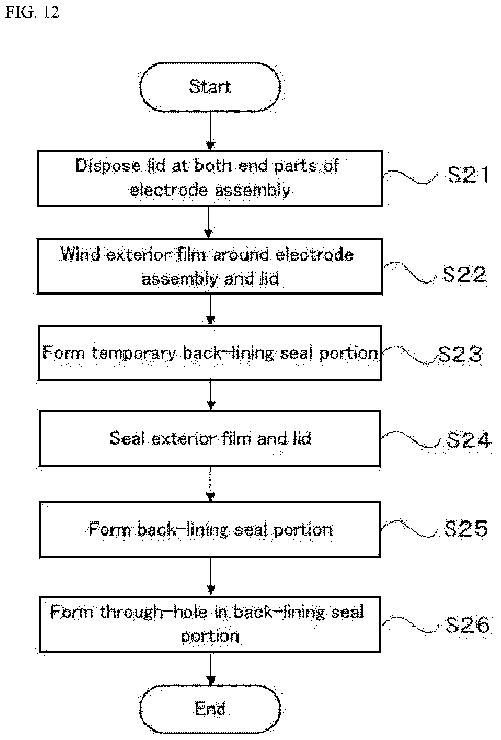

Fig. 12 is a flowchart showing an example of a method for manufacturing the electrical storage device 500. The method for manufacturing the electrical storage device 500 includes, for example, a first step, a second step, a third step and a fourth step. The first to fourth steps are carried out by, for example, an apparatus for manufacturing the electrical storage device 500.

In the first step in step S21, the manufacturing apparatus disposes the lid 600 with the electrode terminal 30 attached to both end parts of the electrode assembly 20. When the first step is completed, the electrode terminal 30 and the electrode of the electrode assembly 20 are electrically connected.

The second step in step S22 is carried out after the first step. In the second step, the manufacturing apparatus winds the exterior film 50 around the electrode assembly 20 and the lid 600.

The third step in step S23 is carried out after the second step. In the third step, the manufacturing apparatus forms a temporary back-lining seal portion by heat-sealing the heat-sealable resin layer of a portion including the first edge 51 and the heat-sealable resin layer of a portion including the second edge 52 in the exterior film 50.

The fourth step in step S24 is carried out after the third step. The manufacturing apparatus seals the electrode assembly 20 by heat-sealing the exterior film 50 and the lid 600.

The fifth step in step S25 is carried out after the fourth step. In the fifth step, the manufacturing apparatus injects an electrolytic solution from the unsealed portion of the temporary back-lining seal portion, evacuates the exterior film 50, and then heat-seals the unsealed portion to form the back-lining seal portion 80. When the electrical storage device 500 is an all-solid-state battery, the step of injecting an electrolytic solution in the fifth step is omitted.

The sixth step in step S26 is carried out after the fifth step. In the sixth step, the manufacturing apparatus forms the through-hole 60A in the back-lining seal portion 80. The sixth step may be carried out after the third step and before the fourth step. In other words, the through-hole 60A may be formed in a sealed portion of the temporary back-lining seal portion.

### <6. Modifications>

The above-described embodiments are an example of possible forms of an electrical storage device according to the present invention, and is not intended to limit the form thereof. The electrical storage device according to the present invention may have a form different from that exemplified in each of the embodiments. An example thereof is a form in which a part of the configuration of any of the embodiments is replaced, changed or omitted, or a form in which a new configuration is added to any of the embodiments. Some examples of modifications of the embodiments will be described below. Note that the following modifications can be combined as long as they are not technically contradictory.

<6-1>
In the first embodiment, the shape of the outer packaging 40 can be arbitrarily changed. In the outer packaging 40, one to three of the lateral portions 71A, 71B, 72A and 72B of the bulging portion 70 are not required to be folded. For example, the lateral portions 71A and 71B of the first bulging portion 71 or the lateral portions 72A and 72B of the second bulging portion 72 are not required to be folded inward. In this modification, the outer packaging 40 is a pouch having a shape in which some parts are of gable top type and others are of brick type.

<6-2>
In the first and second embodiments, the shape of the outer packaging 40 may be in the form of a bag of, for example, three-way seal type, four-way seal type, pillow type or gusset type.

<6-3>
In the first and second embodiments, the form of sealing of a portion including the fourth edge 54 in the exterior film 50 can be arbitrarily changed. For example, in the outer packaging 40, the electrode assembly 20 may be sealed by sealing the fourth edge 54 of the exterior film 50 to the lid disposed lateral to the electrode assembly 20.

<6-4>
In the first embodiment, the two electrode terminals 30 may protrude from, for example, the first bulging portion 71 or the second bulging portion 72 of the outer packaging 40. Similarly, in the second embodiment, the two electrode terminals 30 may protrude from the first bulging portion 271 or the second bulging portion 272.

<6-5>
In the third and fourth embodiments, a location at which the through-hole 60A is formed can be arbitrarily selected. For example, in the third embodiment, the through-hole 60A may be formed in at least one of the first bulging seal portion 91 and the second bulging seal portion 92. For example, in the fourth embodiment, the through-hole 60A may be formed in at least one of the first bulging seal portion 291 or the second bulging seal portion 292.

<6-6>
In the third embodiment, the shape of the outer packaging 40 can be arbitrarily changed. In the outer packaging 40, one to three of the lateral portions 71A, 71B, 72A and 72B of the bulging portion 70 are not required to be folded. For example, the lateral portions 71A and 71B of the first bulging portion 71 or the lateral portions 72A and 72B of the second bulging portion 72 are not required to be folded inward. In this modification, the outer packaging 40 is a pouch having a shape in which some parts are of gable top type and others are of brick type.

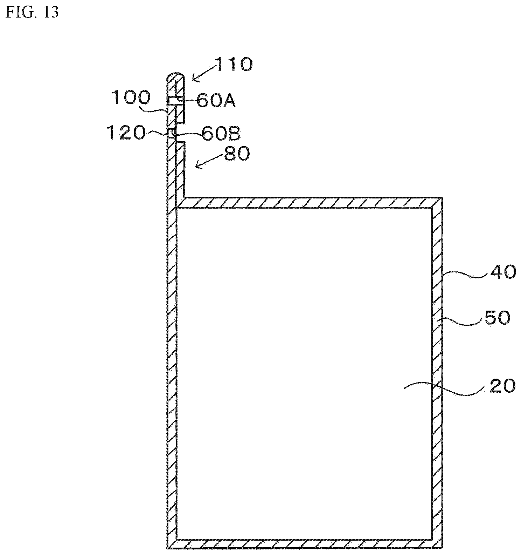

In another example, as shown in Fig. 13, the outer packaging 40 may include an extension portion 100 which is connected to the back-lining seal portion 80 and is located outside the back-lining seal portion 80 with respect to the electrode assembly 20. The extension portion 100 includes a folded portion 110 in which the exterior film 50 is folded back, and an unsealed portion 120 located between the folded portion 110 and the back-lining seal portion 80. In the folded portion 110, the heat-sealable resin layers of the folded exterior film 50 which face each other are heat-sealed. In the unsealed portion 120, the exterior film 50 is not sealed. In this modification, the through-hole 60A may be formed in the folded portion 110, and the through-hole 60B may be formed in the unsealed portion 120. That is, in this modification, at least one of the through-holes 60A and 60B may be formed.

In another example, the outer packaging 40 may have a bag shape (pouch shape). The bag shape is of, for example, three-way seal type, four-way seal type, pillow type or gusset type.

<6-7>
In the third embodiment, the two electrode terminals 30 may protrude from, for example, the first bulging portion 71 or the second bulging portion 72 of the outer packaging 40. Similarly, in the fourth embodiment, the two electrode terminals 30 may protrude from the first bulging portion 271 or the second bulging portion 272.

<6-8>
In the third embodiment, the electrical storage device 10 may be manufactured using the exterior film 50 in which the through-hole 60A is formed in advance. In this modification, a pair of through-holes 60A is formed in advance at a location where the back-lining seal portion 80 is formed in the exterior film 50. The manufacturing apparatus forms the back-lining seal portion 80 with predetermined tension applied to the exterior film 50 by winding the exterior film 50 around the electrode assembly 20 such that the locations of the through-holes 60A coincide with each other. The electrical storage device 400 according to the fourth embodiment and the electrical storage device 500 according to the fifth embodiment can be manufactured by a similar method.

<6-9>
In the third and fourth embodiments, the form of sealing of a portion including the fourth edge 54 in the exterior film 50 can be arbitrarily changed. For example, in the outer packaging 40, the electrode assembly 20 may be sealed by sealing the fourth edge 54 of the exterior film 50 to the lid disposed lateral to the electrode assembly 20.

### Reference Signs List

10, 200, 300 Electrical storage device
20 Electrode assembly
30 Electrode terminal
40, 340 Outer packaging
50 Exterior film
51 First edge
52 Second edge
53 Third edge
54 Fourth edge
60 Seal portion
60A, 60B Through-hole
70, 270 Bulging portion
71A, 271A Lateral portion
71B, 271B Lateral portion
72A, 272A Lateral portion
72B, 272B Lateral portion
80 Back-lining seal portion
90, 290 Bulging seal portion

## Claims

1. An electrical storage device comprising:
an electrode assembly;
an outer packaging that seals the electrode assembly,
the outer packaging including:
an exterior film that wraps the electrode assembly so as to have a bulging portion protruding outward with respect to the electrode assembly; and
a seal portion sealed by joining surfaces of the exterior film which face each other,
the seal portion including:
a bulging seal portion formed in the bulging portion; and
a back-lining seal portion extending in a direction crossing a direction in which the bulging seal portion extends in plan view.

2. The electrical storage device according to claim 1, wherein
the exterior film is wound around the electrode assembly so as to have the bulging portion,
a portion including a first edge and a portion including a second edge in the exterior film are sealed in the back-lining seal portion, and
the bulging seal portion includes a portion in which portions including a third edge in the exterior film are sealed.

3. The electrical storage device according to claim 2, wherein the bulging seal portion further includes a portion in which portions including a fourth edge in the exterior film are sealed.

4. The electrical storage device according to any one of claims 1 to 3, wherein the bulging portion includes at least one lateral portion folded inward so that outer surfaces of the exterior film face each other.

5. The electrical storage device according to claim 4, wherein a root of the back-lining seal portion is located outside the at least one lateral portion.

6. The electrical storage device according to claim 3, further comprising an electrode terminal electrically connected to the electrode assembly, wherein
the bulging portion includes a pair of lateral portions folded inward so that outer surfaces of the exterior film face each other,
the bulging seal portion includes a pair of lateral seal portions which is a portion obtained by sealing the pair of lateral portions, and a central seal portion located between the pair of lateral seal portions, and
the central seal portion is sealed in a state of sandwiching the electrode terminal.

7. The electrical storage device according to any one of claims 1 to 3, wherein when unfolded, the bulging portion has a width larger than a width of the electrode assembly.

8. The electrical storage device according to claim 7, further comprising an electrode terminal electrically connected to the electrode assembly, wherein
the bulging seal portion includes a pair of lateral seal portions located outside an end part of the electrode assembly in a width direction when the bulging portion is unfolded, and a central seal portion located between the pair of lateral seal portions, and
the central seal portion is sealed in a state of sandwiching the electrode terminal.

9. The electrical storage device according to claim 7, wherein the root of the back-lining seal portion includes a portion which overlaps the bulging portion that is in an unfolded state in plan view.

10. The electrical storage device according to claim 7, wherein at least a part of the bulging portion is folded so as to face a surface of the outer packaging.

11. The electrical storage device according to any one of claims 1 to 3, wherein a length of a portion of the bulging portion, which does not include the bulging seal portion, in a direction along the back-lining seal portion is equal to or larger than half a thickness of the electrode assembly in plan view.

12. The electrical storage device according to any one of claims 1 to 3, wherein the root of the back-lining seal portion is located on a boundary between surfaces of the electrode assembly.

13. An electrical storage device comprising:
an electrode assembly; and
an outer packaging that includes an exterior film and seals the electrode assembly,
the outer packaging including:
a seal portion sealed by joining surfaces of the exterior film which face each other; and
a through-hole formed in the seal portion and/or outside the seal portion with respect to the electrode assembly.

14. The electrical storage device according to claim 13, wherein the outer packaging includes a bulging portion in which the exterior film protrudes outward with respect to the electrode assembly,
the seal portion includes:
a back-lining seal portion in which a portion including a first edge and a portion including a second edge in the exterior film are sealed; and
a bulging seal portion which is formed in the bulging portion and in which portions including a third edge in the exterior film are sealed, and
the through-hole is formed in the back-lining seal portion.

15. The electrical storage device according to claim 14, further comprising an electrode terminal electrically connected to the electrode assembly, the bulging seal portion is sealed in a state of sandwiching the electrode terminal.

16. The electrical storage device according to claim 14 or 15, wherein the bulging portion includes at least one lateral portion folded inward so that outer surfaces of the exterior film face each other.

17. The electrical storage device according to claim 14 or 15, wherein when unfolded, the bulging portion has a width larger than a width of the electrode assembly.
